# EUROPÄISCHE PATENTSCHRIFT

(11) **EP 3 335 861 B1**
(45) Veröffentlichungstag und Bekanntmachung des Hinweises auf die Patenterteilung: **01.12.2021**
(21) Anmeldenummer: 16205158.5
(22) Anmeldetag: 19.12.2016
(51) Int. Cl.: A61C 13/00, B33Y 10/00, B33Y 30/00, B29C 64/135, B29C 64/20, B22F 10/20, B22F 10/30, B22F 12/00, B22F 3/105

(54) **RAPID-PROTOTYPING/MANUFACTURING-VERFAHREN**
RAPID PROTOTYPING/MANUFACTURING METHOD
PROCÉDÉ DE FABRICATION/DE PROTOTYPAGE RAPIDE

(43) Veröffentlichungstag der Anmeldung: 20.06.2018
(73) Patentinhaber: Ivoclar Vivadent AG, 9494 Schaan (LI)
(72) Erfinder: Jussel, Rudolf, 6800 Feldkirch (AT); Pokorny, Walter, 6719 Bludesch (AT); Gfeller, Fabio, 9475 Sevelen (CH)
(74) Vertreter: Baronetzky, Klaus

(56) Entgegenhaltungen:
- DE-A1-102012 011 217
- US-B2- 9 469 057

## Beschreibung

Die Erfindung betrifft ein Rapid-Prototyping/Manufacturing-Verfahren gemäß dem Oberbegriff von Anspruch 1.

Bei einem Rapid-Prototyping/Manufacturing-Verfahren wird zunächst mit einem dafür geeigneten CAD-System, ein digitales 3D-Modell eines zu erzeugenden Bauteils generiert. Das digitale 3D-Modell wird dann einer Steuervorrichtung einer CAM-Vorrichtung zugeführt und dort analysiert. Die Steuervorrichtung steuert danach basierend auf dem Analyseergebnis die CAM-Vorrichtung, einen Baujob vorzunehmen, bei dem ein Bauteil, insbesondere schichtweise, erzeugt wird.

Bei dem Baujob wird eine Bauplattform verwendet, die als Basis für die Erzeugung des Bauteils dient. Nach dem Baujob ist ein Entnahmeprozess vorzunehmen, bei dem das Bauteil aus der Bauplattform entnommen wird, insbesondere durch mechanische und/oder chemische Trennungstechnik. Bei einem Stereolithographieverfahren können zusätzliche Support-Strukturen zum Einsatz kommen, die an die Bauplattform angeschlossen sind und beim Baujob zur Festhaltung des Bauteils gegen unter anderem den seitlichen Druck einer Beschichtklinge während des horizontalen Streichens der Beschichtklinge über die gerade polymerisierte Schicht zur Wiederbefüllung des Raums über diese Schicht mit lichtaushärtendem Kunststoff als Baumaterial dienen. Beim Entnahmeprozess sind die Support-Strukturen ebenfalls vom erzeugten Bauteil zu trennen.

Nach dem Entnahmeprozess wird das Bauteil gereinigt und, falls nötig, in z.B. einem Lichthärtegerät oder Ofen vollständig ausgehärtet.

Erst dann kann ein hergestelltes Bauteil verpackt und an den Endnutzer geliefert werden.

Um bei einer Massenfertigung der Bauteile Herstellungszeit zu sparen, sind gemeinsame Rapid-Prototyping/Manufacturing-Verfahren entstanden, bei denen an einer gemeinsamen Bauplattform mehrere Bauteile in einem Baujob gebaut werden. Falls die Anzahl der in einem Baujob herzustellenden Bauteile relativ groß ist oder Baujobs in einer relativ kurzen Zeit nacheinander erledigt werden müssen, kommt es nach der Entnahme und ggf. der anschließenden Nachbehandlung, wie z.B. einer Reinigung und/oder einer Aushärtung, häufig vor, dass der Bediener nicht mehr weiß, welchem Auftrag ein hergestelltes Bauteil entsprechen soll. Dies ist umso mehr der Fall, wenn sich die Bauteile nur in geringem und für einen Mitarbeiter schwer zu unterscheidenden Masse voneinander unterscheiden. Dies trifft insbesondere auf dentale Strukturen bzw. Restaurationen zu.

Um diese Situation zu verbessern, werden seit langem die Bauteile nach, während oder vor der Entnahme mit beispielsweise Farbstiften, Klebern oder Post-It-Notizzetteln beschriftet. Dementsprechend müssen ebenfalls im CAD-System, welches sich für das Rapid-Prototyping/Manufacturing-Verfahren eignet, die Bauteile virtuell beschriftet werden.

Jedoch ist die manuelle Beschriftung zeitaufwendig und bei fast identischen Bauteilen und/oder bei weniger Sorgfalt der für die Beschriftung Zuständigen nicht zuverlässig. Die angebrachten Informationen könnten nach der Entnahme der Bauteile und beispielsweise bei der Reinigung verloren werden. Teilweise steht auch kein vernünftiger Platz für eine Beschriftung direkt am Bauteil zur Verfügung, bzw. ist diese unerwünscht. Dies trifft insbesondere dann zu, wenn alle Flächen Funktionsflächen sind.

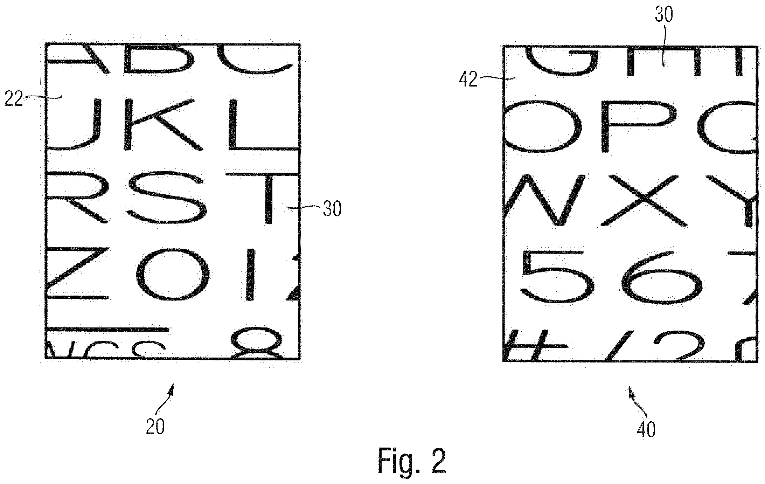

Bei einer bekannten Lösung ist es vorgesehen, dass ein 2D- oder 3D-Barcode in Form von z.B. Quick-Response-Codes (QR-Codes) dort zur Identifikation eines zu fertigenden Dentalrestaurationsteils durch ein Stereolithografieverfahren mit erzeugt und an dem Dentalrestaurationsteil angebracht wird. Durch das Scannen des Barcodes mit einer CCD-Kamera oder einem CCD-Scanner wird das Dentalrestaurationsteil identifiziert. Da der Barcode immer an bzw. neben dem Dentalrestaurationsteil angeordnet ist, wird jedoch das beim Stereolithografieverfahren erforderliche Anbringen von Support-Strukturen am Dentalrestaurationsteil beschränkt. Der Bereich des Dentalrestaurationsteils, der zur Festhaltung mit den Support-Strukturen verbunden sein soll, muss anstelle dessen zur Identifikation mit dem Barcode-Element verbunden werden und ist deshalb nicht stabil. Außerdem muss ein zusätzlicher Schritt vorgenommen werden, um das Dentalrestaurationsteil vom Barcode zu trennen. Darüber hinaus muss für jedes herzustellende Dentalrestaurationsteil ein gemäß der dortigen Fig. 2 nicht kleines Barcode-Element mit erzeugt werden, was zu einem nicht unerheblichen Baumaterialaufwand führt. Für eine gute Lesbarkeit und die Anbringung ausreichender Information, wie z.B. die Zuordnung zu einer Kundenauftragsnummer und Position muss dieser auch entsprechend groß gestaltet sein. Die Druckschrift DE 10 2012 011 217 A1 offenbart Ausnehmungen enthaltende, plattenartige Objekthalter zur Aufnahme von mittels Rapid-Prototyping/Manufacturing-Verfahren herzustellenden Bauteilen, welche je aus einem Objektunterteil und einem Objektoberteil bestehen. Die Objekthalter sind auf einer Trägerplatte fixiert, und die Ausnehmungen des Objekthalters unterscheiden sich in ihrer Geometrie. Dadurch ist eine Kennzeichnung möglich. Jedoch müssen vor dem Baujob zunächst die Objektunterteile nach der Form der Ausnehmungen vorgefertigt und dann je an den Ausnehmungen in an sich bekannter Weise befestigt werden; außerdem muss für die Entnahme jedes Bauteils eine Sollbruchstelle an jedem Objektunterteil vorgesehen sein. Dies ist im Vergleich zu einem allgemeinem Rapid-Prototyping/Manufacturing-Verfahren deutlich komplizierter. Darüber hinaus ist bei dieser Lösung die Größe der erzeugten Bauteile auf die Größe der dortigen Ausnehmungen beschränkt. Ein zu erzeugtes Bauteil, dessen horizontalen Querschnitt eine relativ große Fläche aufweist, die z.B. das Dreifache derjenigen der Ausnehmung beträgt, kann nicht mit dieser Lösung hergestellt werden. US9469057B2 offenbart ein Verfahren gemäss dem Oberbegriff des Anspruchs 1.

Demgegenüber liegt der Erfindung die Aufgabe zugrunde, ein Rapid-Prototyping/Manufacturing-Verfahren für die Erzeugung einer Mehrzahl von Bauteilen gemäß Oberbegriff von Anspruch 1 zu schaffen, welche zumindest teilweise die oben genannten Schwächen überwindet.

Diese Aufgabe wird erfindungsgemäß durch den Anspruch 1 gelöst. Vorteilhafte Weiterbildungen ergeben sich aus den Unteransprüchen.

Erfindungsgemäß wird zum ersten Mal der Boden bzw. die Basis eines Bauteils wirtschaftlich ausgenutzt. An einem Trägersubstrat der erfindungsgemäßen Bauplattform, welches zum Tragen der herzustellenden Bauteile dient und der Bauteilbasis bzw. dem Bauteilboden zugewandt ist, ist eine dreidimensionale Struktur eingebracht oder angebracht. Die dreidimensionale Struktur weist Einzelstrukturen für jedes herzustellende Bauteil oder für jede Gruppe von herzustellenden Bauteilen auf, welche Einzelstrukturen voneinander verschieden sind.

Mit der dreidimensionalen Struktur, die von den unterschiedlichen Einzelstrukturen gebildet ist und damit eine graphische und ortsbezogene Struktur aufweist, wird bei einem Rapid-Prototyping/Manufacturing-Verfahren, insbesondere einem Stereolithographieverfahren, an den ersten Schichten bzw. dem Boden der herzustellenden Bauteile, insbesondere Dentalrestaurationsteile, jeweils eine gespiegelte Struktur hinterlassen. Erfindungsgemäß ist es gewährleistet, dass diese gespiegelten Strukturen unterschiedliche Formen aufweisen, indem in einem Baujob - und auch für einige nacheinander vorgenommene Baujobs - die hergestellten Bauteile an unterschiedlichen Stellen der erfindungsgemäßen Bauplattform aufgebaut werden, an welchen Stellen aufgrund der Anordnung von unterschiedlichen Einzelstrukturen unterschiedliche Grafiken oder Anschnitte vorgesehen sind.

Dadurch ist erfindungsgemäß mit den Informationen bezüglich der Herstellungsstelle jedes Bauteils dieses an seinem Boden eindeutig bezeichnet. Im entsprechenden CAD-System wird eine virtuelle Bauplattform entsprechend der erfindungsgemäßen Bauplattform ausgelegt. Dadurch ist die vorgenannte Herstellungsstelle jedes Bauteils an der erfindungsgemäßen Bauplattform der entsprechenden virtuellen Stelle an der virtuellen Bauplattform zuzuordnen, welche virtuelle Stelle dem betreffenden Auftrag, insbesondere Patienten, entspricht.

Die dreidimensionale Struktur an dem Trägersubstrat der erfindungsgemäßen Bauplattform kann durch generative oder subtraktive, insbesondere abtragende, Verfahren wie Gravur, Elektroerosion, Fräsen hergestellt werden. Zu diesen generativen Verfahren gehören unter anderem die Rapid-Prototyping/Manufacturing-Verfahren.

Mit der Bauplattform kann jedesmal vor einem Baujob das zeit- und materialaufwendige, umständliche Anbringen von z.B. Barcode-Elementen oder Beschriftungsmedien vermieden werden. Außerdem ist durch die erfindungsgemäße Bauplattform die Zuordnung der erzeugten Bauteile zu den entsprechenden Aufträgen zuverlässiger. Eine fehlerhafte und/oder bei z.B. der Reinigung verlorene Beschriftung wird erfindungsgemäß vermieden.

Insbesondere vorteilhaft ist es, dass für ähnliche oder fast identische herzustellende Bauteile die durch die vorliegende Erfindung erlaubte Zuordnung erheblich zuverlässiger ist. Denn die Zuordnung ist nicht mehr durch die Form der Bauteile, sondern durch den Herstellungsort der Bauteile an der Bauplattform, also durch die Form an der Bauteilbasis, realisiert.

Überraschend ist mit der vorliegenden Erfindung die Größe einer Bauteilbasis - und auch die Größe eines Bauteils - nicht von dem horizontalen Querschnitt einer einzelnen Einzelstruktur der erfindungsgemäßen dreidimensionalen Struktur beschränkt.

Beim Bauprozess des vorliegenden Rapid-Prototyping/Manufacturing-Verfahrens, insbesondere Stereolithographieverfahrens, wird zunächst mithilfe einer CAM-Vorrichtung die dreidimensionale Struktur am Trägersubstrat der erfindungsgemäßen Bauplattform von Baumaterial überdeckt oder gefüllt. Durch eine anschließende Bestrahlung des Baumaterials kommen die ersten Schichten der Bauteilbasis vor, an welcher Bauteilbasis ein Teil der dreidimensionalen Struktur gespiegelt übertragen wird. An der Bauteilbasis kann lediglich ein Teil einer Einzelstruktur oder eine ganze Einzelstruktur oder einer Kombination von (Teilen von) Einzelstrukturen der erfindungsgemäßen dreidimensionalen Struktur gespiegelt "kopiert" bzw. übertragen werden.

Durch das Fortsetzen des Baujobs wird dann das Bauteil schichtweise und vollständig aufgebaut.

In einer bevorzugten Ausführungsform ist es vorgesehen, dass das Trägersubstrat der erfindungsgemäßen Bauplattform mit den Einzelstrukturen bedeckt ist, welche Vertiefungen und/oder Erhebungen aufweisen. Die Vertiefungen und Erhebungen können nebeneinander angeordnet sein und unterschiedliche Formen aufweisen. Die Tiefe der Vertiefungen bzw. die Höhe der Erhebungen beträgt 0,02 mm bis 2 mm. Beim Bauprozess wird zunächst durch das Füllen der Vertiefungen oder Überdecken der Erhebungen an der Unterseite des Bauteils eine gespiegelte Struktur gebaut.

Wenn die Tiefe der Vertiefungen der Einzelstrukturen am Trägersubstrat der erfindungsgemäßen Bauplattform relativ groß ist und z.B. ca. 1 mm beträgt, muss insbesondere bei dem Stereolithografieverfahren beim Bilden der ersten Schichten der Bauteilbasis das dortige Baumaterial, wie z.B. ein in dem dortigen Bad gelöster, lichtaushärtender Kunststoff, lange bestrahlt werden, beispielsweise bis mehrere Minuten. Dadurch können die oben genannten ersten Schichten samt dem Baumaterial in den Vertiefungen unter den ersten Schichten vollständig ausgehärtet werden.

Gelegentlich erweist es sich auch vorteilhaft, die Haftung einer ersten bzw. mehrere ersten Schichten, an einer Bauplattform oder einem daran angebrachten Trägersubstrat, durch die eingelassene bzw. aufgebrachte Struktur durch eine vergrößerte Oberfläche zu verbessern.

Wenn die Bauteile Dentalrestaurationsteile, insbesondere Suprakonstruktionen, sind, kann die Basis eines Dentalrestaurationsteils als Klebefläche an einer Prothesenbasis oder einem Abutment dienen. Es ist besonders vorteilhaft, dass erfindunsgemäß die den Erhebungen der Einzelstrukturen der erfindungsgemäßen Bauplattform entsprechenden Vertiefungen an der Basis des Dentalrestaurationsteils die gesamte Klebefläche vergrößert. Dadurch wird die Verbindung zwischen dem Dentalrestaurationsteil und der Prothesenbasis oder dem Abutment, insbesondere im gingivalen Bereich, verbessert.

In diesem Fall beträgt der Klebespalt zwischen der Basis des Dentalrestaurationsteils und der Prothesenbasis bzw. dem Abutment in der Regel ca. 150 µm. Damit eine etwaige Erhebung an der Basis des Dentalrestaurationsteils nicht über 150 µm übersteigt und das Kleben nicht beeinträchtigt, sollte die Tiefe der entsprechenden Vertiefungen der Einzelstrukturen der erfindungsgemäßen Bauplattform auf weniger als 100 µm, insbesondere weniger als 50 µm, ausgelegt werden.

In einer weiteren bevorzugten Ausführungsform ist es vorgesehen, dass jede Einzelstruktur nach einem gleichen geometrischen System aufgebaut ist, also zum Beispiel in Form von Zahlen, Codes oder geometrischen Formen. Beispielsweise können zehn hergestellte Dentalrestaurationsteile entsprechend zehn Aufträgen je zentral auf eine Einzelstruktur der erfindungsgemäßen Bauplattform mit Zahlen von 1 bis 10 oder Buchstaben von A bis J aufgebaut werden. Die Fläche des horizontalen Querschnitts der Einzelstrukturen beträgt bevorzugt 10 % bis 80 % der Basisfläche der Dentalrestaurationsteile. Nach der Entnahme und ggf. den Nachhandlungen der Dentalrestaurationsteile ist dann die Zuordnung ziemlich einfach: Das Dentalrestaurationsteil mit der Zahl "1" oder der Buchstaben "A" an seinem Boden entspricht dem ersten Auftrag; das Dentalrestaurationsteil mit der Zahl "2" oder der Buchstaben "B" an seinem Boden entspricht dem zweiten Auftrag und so weiter.

In einer weiteren bevorzugten Ausführungsform ist es vorgesehen, dass die Einzelstrukturen für das Füllen bzw. Überdecken einer Bauteilbasis bestimmt sind, welche Bauteilbasis, insbesondere bei einem Stereolithographieverfahren, über Support-Strukturen je mit dem zugehörigen Bauteil, insbesondere einem Dentalrestaurationsteil, verbunden ist.

In dieser Ausführungsform ist zur Zuordnung des Bauteils die Bauteilbasis mit der gespiegelten Einzelstruktur(en) versehen. Bis zur Abgabe an Endnutzer ist die Bauteilbasis über Support-Strukturen mit dem zugehörigen Bauteil verbunden. Danach beim Einsatz an z.B. Patienten können die Support-Strukturen verworfen, oder aber weiterverwendet werden. Die Supportstrukturen können je nach Ausgestaltung auch zum sicheren Transport oder Verwahren des Bauteils selbst Verwendung finden.

In einer weiteren bevorzugten Ausführungsform ist es vorgesehen, dass die Einzelstrukturen Erhebungen an dem Trägersubstrat aufweisen, die neben Vertiefungen ausgebildet sind. Eine einzelne Einzelstruktur kann aus einer Kombination von Erhebungen und Vertiefungen, oder lediglich aus Erhebungen, oder lediglich aus Vertiefungen bestehen. Von den Vertiefungen zu den Erhebungen erstrecken sich Flanken, die sich insbesondere voneinander divergieren, um nach dem Baujob die Entnahme der Bauteile aus der erfindungsgemäßen Bauplattform zu erleichtern.

In einer weiteren bevorzugten Ausführungsform ist es vorgesehen, dass die Bauplattform ein abnehmbares und austauschbares Trägersubstrat aufweist. Jedes der Trägersubstrate ist mit unterschiedlichen dreidimensionalen Strukturen zur Erzeugung von unterschiedlich geformten Bauteilbasen ausgelegt.

Die Abnehmbarkeit und Austauschbarkeit des Trägersubstrates der erfindungsgemäßen Bauplattform erlaubt eine deutlich schnellere Bereitstellung von Bauteilen, insbesondere bei der Massenfertigung. Seit langem müssen nach einem Bauprozess Bauteile zunächst aus einer Bauplattform entnommen, welche abschließend zur Entfernung von restlichen Baumaterialien in Form von z.B. Flüssigkeiten oder Pulver gereinigt werden muss, was je nach Material mühsam und zeitraubend sein kann. Erst nach einem Trocknungsprogramm ist die Bauplattform wieder einsatzbereit. Die Zeitdauer von der Verwendung bis zur Wiederverwendung der Bauplattform beträgt in manchen Fällen sogar Stunden.

Erfindungsgemäß wird diese Zeitdauer bevorzugt durch den Austausch des Trägersubstrats erheblich verkürzt, und der Entnahmeprozess sowie die anderen Nachhandlungen sind parallel zu dem Bauprozess für den nächsten Baujob vorzunehmen. Nach einem Bauprozess wird sofort das eingesetzte Trägersubstrat der Bauplattform samt den hierauf platzierten, gefertigten Bauteilen abgenommen und durch ein anderes Trägersubstrat ersetzt, welches für den nächsten Baujob zur Verfügung gestellt werden sollte.

In einer weiteren bevorzugten Ausführungsform ist es vorgesehen, dass die von einander verschiedenen Einzelstrukturen zusätzlich ein miteinander gleiches Merkmal wie ein Firmenlogo aufweisen. Dadurch ist auf dem Boden jedes Bauteils das Firmenlogo vorgesehen.

In einer weiteren bevorzugten Ausführungsform ist es vorgesehen, dass die Rapid-Prototyping/Manufacturing-Bauplattform, insbesondere ihr Teil an dem Trägersubstrat, aus verformbarem Material besteht.

Nach dem Bauprozess wird in der Regel zur Entnahme von Bauteilen aus der Bauplattform ein Werkzeug wie z.B. ein Auswerfer verwendet. Außerdem wird zur Entnahme eine gewisse Zeit benötigt.

Mit der verformbaren, insbesondere elastischen, Bauplattform können die hergestellten Bauteile unter elastischem oder plastischem Verformen der Bauplattform, insbesondere durch das Abbiegen und/oder Verdrehen der Bauplattform, z.B. herausfallen und damit leicht entnommen werden. Dies geschieht werkzeuglos und innerhalb einer kurzen Zeitspanne.

In einer weiteren bevorzugten Ausführungsform ist es vorgesehen, dass die gespiegelte Struktur - auch Negativabbild (Erhebung) bzw. Positivabbild (Vertiefung) genannt - an der Bauteilbasis von einer Bildaufnahmevorrichtung erfasst und von einer Steuervorrichtung ausgewertet wird. Nach dem Auswertungsergebnis ordnet die Steuervorrichtung das Bauteil dem entsprechenden Auftrag zu. Insbesondere nimmt bei Realisierung des Bauteils als Dentalrestaurationsteils die Steuervorrichtung eine patientenspezifische Zuordnung vor.

In weiterer Folge können auch die Prozessparameter bzw. die Baujobdaten (Datum, Anlage, Bediener, etc.) dem Bauteil bzw. Auftrag zwecks Qualitätssicherung zugeordnet werden.

In einer weiteren bevorzugten Ausführungsform ist es vorgesehen, dass das erfindungsgemäße Rapid-Prototyping/Manufacturing-Verfahren Teil eines Herstellverfahrens per CAD/CAM ist. Im Rahmen eines Herstellverfahrens wird zunächst ein virtuelles Modell des Bauteils erzeugt und eine Zuordnung zwischen dem Modell und der Form der Einzelstruktur(en) erzeugt.

Anschließend wird das Bauteil in einem Rapid-Prototyping/Manufacturing-Verfahren, insbesondere dem Stereolithographieverfahren, an der Bauplattform gebaut. In einem digitalen Workflow bezüglich des betreffenden Auftrags verbleiben dann die Informationen über die Bauteilbasis mit dem Negativabbild bzw. Positivabbild der Einzelstruktur(en) an dem Bauteil zur weiteren Bauteilverfolgung bis zur Abgabe an den Endnutzer.

Weitere Vorteile, Einzelheiten und Merkmale ergeben sich aus der nachfolgenden Beschreibung eines Ausführungsbeispiels der Erfindung anhand der Zeichnungen.

Es zeigen:
- Fig. 1: eine schematisch dargestellte Ausführungsform der erfindungsgemäßen Rapid-Prototyping/Manufacturing-Bauplattform; und
- Fig. 2: zwei durch die erfindungsgemäße Rapid-Prototyping/Manufacturing-Bauplattform und das erfindungsgemäße Rapid-Prototyping/Manufacturing-Verfahren hergestellte und schematisch dargestellte Bauteile in der Unteransicht.

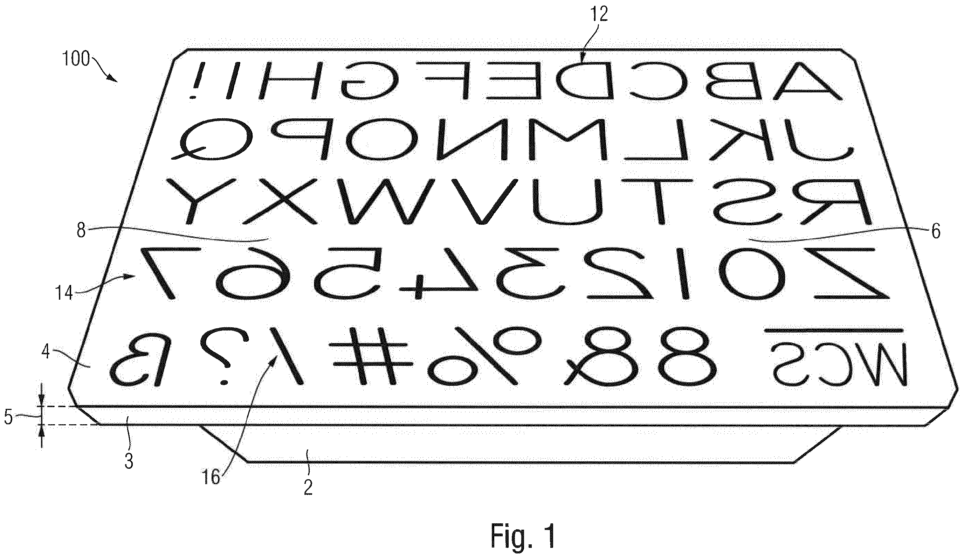

Die in Fig. 1 schematisch dargestellte erfindungsgemäße Rapid-Prototyping/Manufacturing-Bauplattform 100 weist einen Bauplattformhalter 2 auf, der eine Form 3 als Basis für die Erzeugung einer Mehrzahl von Bauteilen stützt. Die Dicke 5 der Form 3 beträgt mindestens 10 mm, insbesondere mindestens 30 mm.

An dem Trägersubstrat 4 der erfindungsgemäßen Bauplattform 100 sind Einzelstrukturen 12, 14, 16 vorgesehen, welche als Ganzes eine dreidimensionale Struktur bilden und gemäß der dargestellten Ausführungsform in Form der gespiegelten Buchstaben von A bis Z, der gespiegelten Zahlen von 1 bis 8 und der gespiegelten Sonderzeichen "?", "\", "#" und so weiter ausgebildet sind.

Die Einzelstrukturen 12, 14, 16 weisen in der dargestellten Ausführungsform Vertiefungen und Erhebungen - aus Fig. 1 nicht ersichtlich - auf, welche an dem Trägersubstrat 4 durch generatives und subtraktives Verfahren in an sich bekannter Weise hergestellt werden. Die Tiefe der Vertiefungen beziehungsweise Höhe der Erhebungen beträgt 0,02 mm bis 2 mm.

Beim Bauprozess werden durch Baumaterial die Vertiefungen gefüllt, die Erhebungen überdeckt, und so entstehen die ersten Schichten der Bauteile 20, 40 als Basen der Bauteile 20, 40. An der der Bauplattform 100 zugewandten Seite 30 der jeweiligen Bauteilbasen wird ein Negativabbild bzw. Positivabbild 22, 42 der dreidimensionalen Stützstruktur der Bauplattform 100 gebildet (vgl. Fig. 2).

Wie den Fig. 1 und 2 zu entnehmen ist, entsprechen die Negativabbilder bzw. Positivabbilder 22 und 42 an den Basen der Bauteile 20 und 40 je den Bereichen 6 und 8 an dem Trägersubstrat 4 der erfindungsgemäßen Bauplattform 100.

Dadurch sind mit den unterschiedlichen Formen der Negativabbilder bzw. Positivabbilder 22 und 42 die gefertigten Bauteile 20 und 40 je eindeutig den zutreffenden Stellen an der erfindungsgemäßen Bauplattform 100 zuzuordnen, welche Stellen im entsprechenden CAD-System je eindeutig mit den zugehörigen Aufträgen, insbesondere Patienten im Fall der Bauteile als Dentalrestaurationsteile, verbunden sind.

Die Informationen bezüglich der Bauteilbasis mit dem Negativabbild bzw. Positivabbild 22 und 42 können zur weiteren Bauteilverfolgung in einem digitalen Workflow bis zur Abgabe an einen Endnutzer verbleiben.

Dadurch ist erfindungsgemäß die Zuordnung der hergestellten Bauteile zu Aufträgen gegenüber dem Stand der Technik einfacher, zeitsparender und zuverlässiger.

Gemäß der dargestellten Ausführungsform ist eine Mehrzahl von Erhebungen der Einzelstrukturen neben Vertiefungen ausgebildet und divergieren von den Vertiefungen zu den Erhebungen erstreckende Flanken voneinander, so dass dementsprechend an der erzeugten Bauteilbasis das Negativabbild bzw. Positivabbild 22, 24 Erhebungen, Vertiefungen und Flanken aufweist, welche Flanken von den Vertiefungen zu den Erhebungen an der Bauteilbasis konvergieren. Dadurch wird nach dem Baujob die Entnahme der Bauteile 20, 40 aus der erfindungsgemäßen Bauplattform 100 erleichtert.

Das Trägersubstrat 4 der erfindungsgemäßen Bauplattform 100 ist abnehmbar und austauschbar, was eine deutlich schnellere Herstellung von Bauteilen, insbesondere bei der Massenfertigung, realisiert. Erfindungsgemäß können der nach dem Bauprozess vorgenommene Entnahmeprozess sowie die weiteren Nachhandlungen parallel zu dem Bauprozess für den nächsten Baujob vorgenommen werden. Nach einem Bauprozess wird sofort das eingesetzte Trägersubstrat 4 der Bauplattform 100 samt den hierauf platzierten, gefertigten Bauteilen 20, 40 abgenommen und durch ein anderes Trägersubstrat 4 ersetzt, welches für den nächsten Baujob zur Verfügung gestellt werden sollte.

Die erfindungsgemäße Bauplattform 100, insbesondere ihre Form 3, besteht gemäß der in Fig. 1 dargestellten Ausführungsform aus verformbarem, insbesondere elastischem, Material, was unter anderem den Entnahmeprozess vereinfacht.

In einer nicht dargestellten Ausführungsform ist es vorgesehen, dass an der Basis eines Bauteils, insbesondere eines kleinen Bauteils, lediglich eine Einzelstruktur 12, 14, 16 oder lediglich ein Teil einer Einzelstruktur 12, 14, 16 übertragen ist. Dies beeinträchtigt aber nicht die Genauigkeit der Zuordnung, solange das Negativabbild bzw. Positivabbild 22 und 42 seine zugehörige Stelle an dem Trägersubstrat 4 der erfindungsgemäßen Bauplattform 100 zutreffend bezeichnen kann oder lediglich einen Kandidaten im entsprechenden CAD-System trifft.

In einer weiteren nicht dargestellten Ausführungsform können die Einzelstrukturen 12, 14, 16 auch in Form von Mustern und/oder Symbolen und/oder Linien und/oder geometrischen Formen und/oder Grafiken und/oder Koordinatensystemen und/oder RFID-Funketiketten und/oder Barcodes und/oder Quick-Response-Codes und/oder weiteren Codes zur Identifikation vorgesehen sein.

In einer weiteren nicht dargestellten Ausführungsform ist es vorgesehen, dass die von einander verschiedenen Einzelstrukturen 12, 14, 16 zusätzlich ein Firmenlogo aufweisen. Dadurch ist auf dem Boden jedes hergestellten Bauteils 20, 40 das Firmenlogo zu Werbezwecken vorgesehen.

## Patentansprüche

1. Rapid-Prototyping/Manufacturing-Verfahren, insbesondere Stereolithographieverfahren, für die Erzeugung einer Mehrzahl von Bauteilen (20, 40), insbesondere Dentalrestaurationsteilen, welches von einer Bauplattform (100) als Basis für den Aufbau der Bauteile (20, 40) ausgeht, wobei die Bauplattform (100) ein Trägersubstrat (4) zum Tragen der herzustellenden Bauteile (20, 40) aufweist, an dem eine dreidimensionale Struktur eingebracht oder angebracht wird, die Einzelstrukturen (12, 14, 16) für jedes herzustellende Bauteil (20, 40) oder für jede Gruppe von herzustellenden Bauteilen (20, 40) ausbildet, welche Einzelstrukturen (12, 14, 16) voneinander verschieden sind, und dass die Bauteile (20, 40) oder Gruppen von Bauteilen (20, 40) je ausgehend von den Einzelstrukturen (12, 14, 16) unter Abformen und Übertragen der dreidimensionalen Struktur der Bauplattform (100) auf die Bauteilbasis erzeugt beziehungsweise übertragen werden, und dass,die Bauteile (20, 40) je zusammen mit der Bauteilbasis von der Bauplattform (100) entfernt werden und die der Bauplattform (100) zugewandte Seite (30) der Bauteilbasis ein Negativabbild und/oder ein Positivabbild (22, 42) der dreidimensionalen Stützstruktur der Bauplattform (100) zur Identifizierung des Bauteils (20, 40) oder der Gruppen von Bauteilen (20, 40) bildet, und dass nach dem Bau des Bauteils (20, 40) dieses mit seiner Bauteilbasis je von beziehungsweise aus der Einzelstruktur (12, 14, 16) des Trägersubstrats (4) der Bauplattform (100) gelöst wird und über die Form der Bauteilbasis identifiziert wird, **dadurch gekennzeichnet, dass** das Negativabbild und/oder Positivabbild (22, 42) an der Bauteilbasis von einer Bildaufnahmevorrichtung erfasst und von einer Steuervorrichtung ausgewertet wird, wobei die Steuervorrichtung insbesondere bei Realisierung des Bauteils (20, 40) als Dentalrestaurationsteil die Zuordnung zu den zugehörigen Patienten vornimmt.

2. Verfahren nach Anspruch 1, **dadurch gekennzeichnet, dass** das Verfahren Teil eines Herstellverfahrens per CAD/CÄM ist, in welchem zunächst ein virtuelles Modell des Bauteils (20, 40) erzeugt und eine Zuordnung zwischen dem Modell und der Form der Einzelstruktur (12, 14, 16) erzeugt wird, dass dann das Bauteil (20, 40) in einem Stereolithographieverfahren an der Bauplattform (100) gebaut wird und dass dann die Bauteilbasis mit dem Negativabbild und/oder Positivabbild (22, 42) der Einzelstruktur (12, 14, 16) an dem Bauteil (20, 40) zur weiteren Bauteilverfolgung in einem digitalen Workflow bis zur Abgabe an den Endnutzer verbleibt.

3. Verfahren nach einem der vorhergehenden Ansprüche, **dadurch gekennzeichnet, dass** das Trägersubstrat (4) der Bauplattform (100) mit den Einzelstrukturen (12, 14, 16) bedeckt wird, welche Vertiefungen und/oder Erhebungen aufweisen, deren Tiefe beziehungsweise Höhe 0,02 mm bis 2 mm beträgt.

4. Verfahren nach einem der vorhergehenden Ansprüche, **dadurch gekennzeichnet, dass** jede Einzelstruktur (12, 14, 16) nach einem gleichen geometrischen System aufgebaut wird, also zum Beispiel in Form von Zahlen, Codes oder geometrischen Formen.

5. Verfahren nach einem der vorhergehenden Ansprüche, **dadurch gekennzeichnet, dass** die Einzelstrukturen (12, 14, 16) für das Füllen bzw. Überdecken einer Bauteilbasis bestimmt werden, welche Bauteilbasis über Support-Strukturen je mit dem zugehörigen Bauteil (20, 40), insbesondere einem Dentalrestaurationsteil, verbunden wird.

6. Verfahren nach einem der vorhergehenden Ansprüche, **dadurch gekennzeichnet, dass** die dreidimensionale Struktur in der Bauplattform (100) an dem Trägersubstrat (4) durch generative oder subtraktive, insbesondere abtragende Verfahren wie Gravur, Elektroerosion, Fräsen, hergestellt wird.

7. Verfahren nach einem der vorhergehenden Ansprüche, **dadurch gekennzeichnet, dass** die Einzelstrukturen (12, 14, 16) Erhebungen an dem Trägersubstrat aufweisen, die neben Vertiefungen ausgebildet werden, wobei insbesondere sich von den Vertiefungen zu den Erhebungen erstreckende Flanken voneinander divergieren.

8. Verfahren nach einem der vorhergehenden Ansprüche, **dadurch gekennzeichnet, dass** die Bauplattform (100) ein abnehmbares und austauschbares Trägersubstrat (4) aufweist, wobei jedes der Trägersubstrate (4) mit unterschiedlichen dreidimensionalen Strukturen zur Erzeugung von unterschiedlich geformten Bauteilbasen ausgelegt wird.

9. Verfahren nach einem der vorhergehenden Ansprüche, **dadurch gekennzeichnet, dass** die von einander verschiedenen Einzelstrukturen (12, 14, 16) zusätzlich mit einem miteinander gleiches Merkmal wie einem Firmenlogo versehen werden.

10. Verfahren nach einem der vorhergehenden Ansprüche, **dadurch gekennzeichnet, dass** die Rapid-Prototyping/Manufacturing-Bauplattform (100), insbesondere ihr Teil an dem Trägersubstrat (4), aus elastisch oder plastisch verformbarem einmalig oder mehrmalig verwendbaren Material ausgebildet wird.

## Claims

1. A rapid prototyping/manufacturing process, especially a stereolithography process, for the production of a plurality of components (20, 40), especially dental restoration components, which starts from a construction platform (100) as a basis for the construction of the components (20, 40), wherein the construction platform (100) comprises a carrier substrate (4) for carrying the components (20, 40) to be produced, to which a three-dimensional structure is introduced or attached, which forms individual structures (12, 14, 16) for each component (20, 40) to be produced or for each group of components (20, 40) to be produced, which structures form individual structures (12, 14, 16) for each component (20, 40) to be produced, which individual structures (12, 14, 16) are different from each another, and in that the components (20, 40) or groups of components (20, 40) are each produced or transferred starting from the individual structures (12, 14, 16) by molding and transferring the three-dimensional structure of the construction platform (100) onto the component base, and in that the respective components (20, 40), together with the component base, are removed from the construction platform (100), and the side (30) of the component base facing the construction platform (100) is provided with a negative image and/or a positive image (22, 42) of the three-dimensional support structure of the construction platform (100) for identifying the component (20, 40) or groups of components (20, 40), and in that, following construction of the component (20, 40), it is detached with its respective component base from the individual structure (12, 14, 16) of the carrier substrate (4) of the construction platform (100) and is identified using the shape of the component base, **characterized in that** the negative image and/or positive image (22, 42) at the component base is recorded by an image recording device and evaluated by a control device, the control device performing the assignment to the associated patients especially when the component (20, 40) is realized as a dental restoration part.

2. The method according to claim 1, **characterized in that** the method is part of a manufacturing process by CAD/CÄM, in which first a virtual model of the component (20, 40) is generated and an assignment between the model and the shape of the individual structure (12, 14, 16) is generated, **in that** subsequently the component (20, 40) is constructed on the construction platform (100) in a stereolithography process, and **in that** then the component base including the negative image and/or positive image (22, 42) of the individual structure (12, 14, 16) remains on the component (20, 40) for further component tracking in a digital workflow until delivery to the end user.

3. The method according to one of the preceding claims, **characterized in that** the carrier substrate (4) of the construction platform (100) is covered with the individual structures (12, 14, 16), which have depressions and/or elevations the depth or height of which is 0.02 mm to 2 mm.

4. The method according to one of the preceding claims, **characterized in that** each individual structure (12, 14, 16) is constructed according to the same geometric system, for example in the form of numbers, codes or geometric shapes.

5. The method according to one of the preceding claims, **characterized in that** the individual structures (12, 14, 16) are determined for filling or covering a component base, which respective component base is connected to the associated component (20, 40), especially a dental restoration part. via support structures.

6. The method according to one of the preceding claims, **characterized in that** the three-dimensional structure in the construction platform (100) is produced on the carrier substrate (4) by generative or subtractive, especially ablative processes such as engraving, electroerosion, milling.

7. The method according to one of the preceding claims, **characterized in that** the individual structures (12, 14, 16) have elevations on the carrier substrate which are formed adjacent to depressions, wherein especially flanks extending from the depressions to the elevations diverge from each other.

8. The method according to any one of the preceding claims, **characterized in that** the construction platform (100) comprises a removable and replaceable carrier substrate (4), wherein each of the support substrates (4) is constructed having different three-dimensional structures for generating differently shaped component bases.

9. The method according to one of the preceding claims, **characterized in that** the individual structures (12, 14, 16) which differ from each other are additionally provided with a feature which is identical among each other, such as a company logo.

10. The method according to one of the preceding claims, **characterized in that** the rapid prototyping/manufacturing construction platform (100), especially its part located on the carrier substrate (4), is formed from elastically or plastically deformable material that can be used one time or several times.

## Revendications

1. Procédé de prototypage/fabrication rapide, en particulier procédé de stéréolithographie, pour la fabrication d'une pluralité de composants (20, 40), en particulier de composants de restauration dentaire, qui part d'une plate-forme de construction (100) comme base pour la construction des composants (20, 40), où la plate-forme de construction (100) présente un substrat porteur (4) pour porter les composants (20, 40) à fabriquer, à laquelle une structure tridimensionnelle est insérée ou attachée, qui forme des structures individuelles (12, 14 ; 16) pour chaque composant (20, 40) à fabriquer ou pour chaque groupe de composants (20, 40) à fabriquer, où ces structures individuelles (12, 14, 16) sont différentes entre elles, et en ce que les composants (20, 40) ou groupes de composants (20, 40) sont respectivement produits ou transférés à partir des structures individuelles (12, 14, 16) par moulage et transfert de la structure tridimensionnelle de la plate-forme de construction (100) sur la base des composants, et en ce que les composants (20, 40) sont respectivement retirés de la plate-forme de construction (100) conjointement avec la base de composants et le côté (30) de la base de composants faisant face à la plate-forme de construction (100) forme une image négative et/ou une image positive (22, 42) de la structure de support tridimensionnelle de la plate-forme de construction (100) pour l'identification du composant (20, 40) ou des groupes de composants (20, 40), et en ce que, après la construction du composant (20, 40), celui-ci est respectivement détaché ou enlevé de sa base de composant de la structure individuelle (12, 14, 16) du substrat porteur (4) de la plate-forme de construction (100) et est identifié par le biais de la forme du fond de composant, **caractérisé en ce que** l'image négative et/ou l'image positive (22, 42) au niveau de la base du composant est enregistrée par un dispositif d'enregistrement d'images et évaluée par un dispositif de commande, où le dispositif de commande en particulier lorsque le composant (20, 40) est réalisé en tant que pièce de restauration dentaire, effectue l'affectation aux patients associés.

2. Procédé selon la revendication 1, **caractérisé en ce que** le procédé fait partie d'un processus de fabrication par CAO/FAO, dans lequel d'abord un modèle virtuel du composant (20, 40) et une affectation entre le modèle et la forme de la structure individuelle (12, 14, 16) sont générés, **en ce que** par la suite le composant (20, 40) est construit sur la plate-forme de construction (100) dans un processus de stéréolithographie, et **en ce qu'**ensuite la base du composant avec l'image négative et/ou l'image positive (22, 42) de la structure individuelle (12, 14, 16) reste sur le composant (20, 40) pour un suivi ultérieur du composant dans un flux de travail numérique jusqu'à la livraison à l'utilisateur final.

3. Procédé selon l'une des revendications précédentes, **caractérisé en ce que** le substrat porteur (4) de la plate-forme de construction (100) est recouvert des structures individuelles (12, 14, 16) qui présentent des creux et/ou des bosses dont la profondeur ou la hauteur est comprise entre 0,02 mm et 2 mm.

4. Procédé selon l'une des revendications précédentes, **caractérisé en ce que** chaque structure individuelle (12, 14, 16) est construite selon un même système géométrique, par exemple sous forme de chiffres, de codes ou de formes géométriques.

5. Procédé selon l'une des revendications précédentes, **caractérisé en ce que** les structures individuelles (12, 14, 16) sont destinées à remplir ou recouvrir un fond de composant, où le fond de composant est à relier respectivement au composant associé (20, 40), en particulier une pièce de restauration dentaire, par l'intermédiaire de structures de support.

6. Procédé selon l'une des revendications précédentes, **caractérisé en ce que** la structure tridimensionnelle dans la plate-forme de construction (100) est produite sur le substrat de support (4) par des procédés génératifs ou soustractifs, en particulier des procédés ablatifs, tels que la gravure, l'électroérosion, le fraisage.

7. Procédé selon l'une des revendications précédentes, **caractérisé en ce que** les structures individuelles (12, 14, 16) présentent des saillies sur le substrat de support qui sont formées à côté de creux, où en particulier les flancs qui s'étendent des creux aux saillies divergent les uns des autres.

8. Procédé selon l'une quelconque des revendications précédentes, **caractérisé en ce que** la plate-forme de construction (100) comprend un substrat de support amovible et remplaçable (4), où chacun desdits substrats de support (4) est conçu avec différentes structures tridimensionnelles pour produire des bases de composants de formes différentes.

9. Procédé selon l'une des revendications précédentes, **caractérisé en ce que** les structures individuelles (12, 14, 16) qui se distinguent les unes des autres sont en outre pourvues d'une caractéristique identique les unes aux autres, telle qu'un logo d'entreprise.

10. Procédé selon l'une des revendications précédentes, **caractérisé en ce que** la plate-forme de construction de prototypage/fabrication rapide (100), en particulier sa partie sur le substrat porteur (4), est formée d'un matériau déformable élastiquement ou plastiquement qui peut être utilisé une ou plusieurs fois.
